(19) Europäisches Patentamt
European Patent Office
Office européen des brevets

(11) EP 3 654 505 A1

(12) EUROPEAN PATENT APPLICATION

(43) Date of publication:
**20.05.2020 Bulletin 2020/21**

(51) Int Cl.:
***H02M 1/15*** *(2006.01)* ***H02M 1/12*** *(2006.01)*
***H02M 7/483*** *(2007.01)* ***H02M 7/493*** *(2007.01)*

(21) Application number: **19208845.8**

(22) Date of filing: **13.11.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.11.2018 JP 2018213566**

(71) Applicant: **Hitachi, Ltd.**
**Tokyo 100-8280 (JP)**

(72) Inventors:
- **KAWAZOE, Hironari**
  **Tokyo, 100-8280 (JP)**
- **TANAKA, Chikara**
  **Tokyo, 100-8280 (JP)**
- **KIYOFUJI, Yasuhiro**
  **Tokyo, 100-8280 (JP)**
- **ITO, Tomomichi**
  **Tokyo, 100-8280 (JP)**
- **KIKUCHI, Akira**
  **Tokyo, 100-8280 (JP)**
- **WATANABE, Kenta**
  **Tokyo, 100-8280 (JP)**

(74) Representative: **MERH-IP Matias Erny Reichl Hoffmann**
**Patentanwälte PartG mbB**
**Paul-Heyse-Strasse 29**
**80336 München (DE)**

# (54) POWER CONVERSION DEVICE AND POWER CONVERSION METHOD THEREFOR

(57) To provide a power conversion device 1 and a power conversion method which can reduce harmonic of AC output without causing pulsation of a voltage between a DC P terminal and a DC N terminal. To provide a power conversion device 1 that converts an alternating current to a direct current or a direct current to an alternating current, the power conversion device 1 including a plurality of arm groups ARMP, ARMN connected in parallel, each arm group including P-side arms ARMP1 to ARMPL formed between the DC P terminal and an AC terminal 4, and N-side arms ARMN1 to ARMNL formed between the DC N terminal and the AC terminal 4, in which each of the P-side arms ARMP1 to ARMPL and N-side arms ARMN1 to ARMNL includes a plurality of unit converters 2 connected in series, each unit converter 2 including a capacitor 23 and a semiconductor switching element (21L, 21H) connected in parallel, the plurality of semiconductor switching elements 21L, 21H in the plurality of unit converters 2 which constitute the arm are turned on and off by a gate pulse signal group determined by a modulation wave and a carrier wave group, and when the plurality of arm groups (ARMP, ARMN) connected in parallel are from a first arm ARM1 to an L-th arm, a phase difference $\phi$ is set between the carrier wave group of the first arm ARM1 and the carrier wave group of the L-th arm, and an output voltage pulse of the L-th arm is shifted from the first arm ARM1.

*FIG. 1*

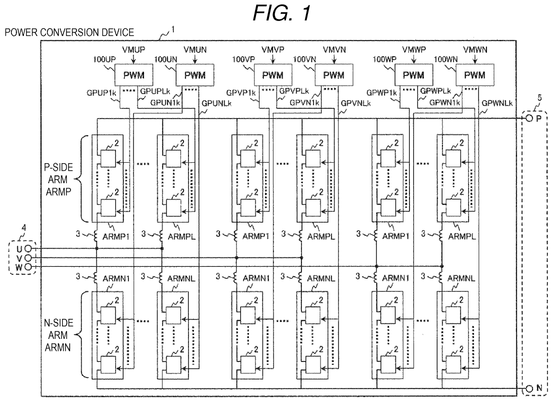




Printed by Jouve, 75001 PARIS (FR)

(Cont. next page)

FIG. 3

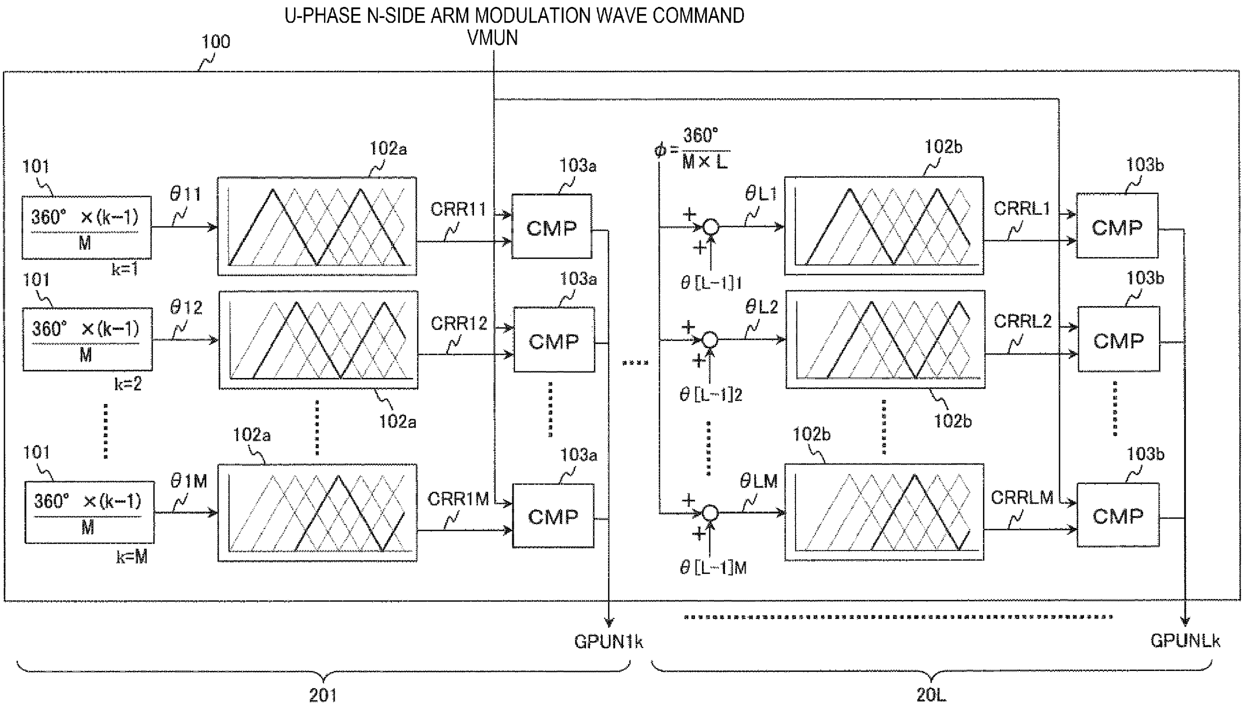
U-PHASE N-SIDE ARM MODULATION WAVE COMMAND
VMUN
100
101
360° × (k−1) / M
k=1
k=2
k=M
θ11
θ12
θ1M
102a
CRR11
CRR12
CRR1M
103a
CMP
φ = 360° / M × L
θL1
θL2
θLM
θ[L−1]1
θ[L−1]2
θ[L−1]M
102b
CRRL1
CRRL2
CRRLM
103b
GPUN1k
GPUNLk
201
20L

## Description

BACKGROUND OF THE INVENTION

1. Field of the Invention

The present invention relates to a power conversion device using a moduler multilevel converter (hereinafter referred to as MMC) and a power conversion method therefor.

2. Description of the Related Art

There is disclosed a circuit configuration of an MMC as one of the power conversion devices which convert alternating current into direct current or direct current into alternating current, and a power conversion method for the MMC. The MMC can withstand a high voltage by connecting unit converters which include a diode, a capacitor, and a semiconductor switching element such as an insulated-gate bipolar transistor (IGBT) in series.

When the unit converters of the MMC are controlled by pulse-width modulation (PWM), AC output can be made into a multilevel waveform by appropriately shifting a phase of a carrier wave corresponding to each unit converter.

Japanese Patent No. 6017272 (Patent Literature 1) describes a power conversion method for reducing harmonic of AC output of an MMC when the number of unit converters in an arm is even or odd in a circuit configuration of the MMC including a P-side arm connected to a DC P terminal and an N-side arm connected to a DC N terminal.

According to Patent Literature 1, when a number M of the unit converters in the arm is even, a phase difference between a carrier wave group of the P-side arm and a carrier wave group of the N-side arm is set to $\pi/M$, and when the number of unit converters is odd, the phase difference between the carrier wave groups is set to 0. Accordingly, output voltage pulses of the P-side arm and the N-side arm are shifted, the number of stages of a multilevel waveform is increased, and the harmonic of the AC output are reduced.

However, in the PWM control method of Patent Literature 1, since a potential difference is generated between the P-side arm and the N-side arm by shifting the output voltage pulses, there is a problem that a voltage between the DC P terminal and the DC N terminal pulsates. When the voltage between the DC P terminal and the DC N terminal pulsates, a reactor and a filter facility for removing current ripple are newly required. Therefore, it is preferable to reduce pulsation of the DC voltage as much as possible.

SUMMARY OF THE INVENTION

An object of the invention is to provide a power conversion device and a power conversion method which can reduce harmonic of AC output without causing pulsation of a voltage between a DC P terminal and a DC N terminal.

In order to solve the above problems, the invention provides a power conversion device that converts an alternating current to a direct current or a direct current to an alternating current, the power conversion device including:

> a plurality of arm groups connected in parallel, each arm group including P-side arms formed between a DC P terminal and an AC terminal, and N-side arms formed between a DC N terminal and the AC terminal, in which each of the P-side arms and N-side arms includes a plurality of unit converters connected in series, each unit converter including a capacitor and a semiconductor switching element connected in parallel,
> the plurality of semiconductor switching elements in the plurality of unit converters which constitute the arm are turned on and off by a gate pulse signal group determined by a modulation wave and a carrier wave group, and
> when the plurality of arm groups connected in parallel are from a first arm to an L-th arm, a phase difference $\phi$ is set between the carrier wave group of the first arm and the carrier wave group of the L-th arm, and an output voltage pulse of the L-th arm is shifted from the first arm.

In addition, the invention provides a power conversion method for a power conversion device that converts an alternating current to a direct current or a direct current to an alternating current, in which
the power conversion device including a plurality of arm groups connected in parallel, each arm group including P-side arms formed between a DC P terminal and each terminal of a three-phase AC, and N-side arms formed between a DC N terminal and each terminal of the three-phase AC,
each of the P-side arms and N-side arms includes a plurality of unit converters connected in series, each unit converter including a capacitor and a semiconductor switching element connected in parallel,
the plurality of semiconductor switching elements in the plurality of unit converters which constitute the arm are turned on and off by a gate pulse signal group determined by a modulation wave and a carrier wave group, and
when the plurality of arm groups connected in parallel are from a first arm to an L-th arm, a phase difference $\phi$ is set

between the carrier wave group of the first arm and the carrier wave group of the L-th arm, and an output voltage pulse of the L-th arm is shifted from the first arm.

According to the invention, it is possible to provide the power conversion device and the power conversion method therefor which can reduce harmonic of AC output without causing pulsation of the voltage between the DC P terminal and the DC N terminal by shifting the output voltage pulse between the arms connected in parallel.

BRIEF DESCRIPTION OF THE DRAWINGS

FIG. 1 is a diagram showing a configuration example of a power conversion device according to an embodiment of the invention.

FIG. 2 is a diagram showing a configuration example of a unit converter inside an arm.

FIG. 3 is a diagram representatively showing a calculation block executed by a PWM control unit 100UN of a U-phase N-side arm.

FIG. 4 is a diagram showing phase relationship of a carrier wave group of each arm in an organized manner.

FIG. 5 is a diagram showing waveforms of each part when the number of parallel arms L = 2 and a number M of unit converters is 3 (odd number).

FIG. 6 is a diagram showing waveforms of each part when the number of parallel arms L = 2 and the number M of unit converters is 4 (even number).

DESCRIPTION OF THE PREFERRED EMBODIMENTS

An embodiment of the invention will be described below with reference to the drawings.

[Embodiment]

FIG. 1 is a diagram showing a configuration example of a power conversion device according to an embodiment of the invention. A power conversion device 1 is installed between an AC terminal 4 with three phases (U, V, W), for example, and a DC terminal 5, and has a function of converting alternating current to direct current or direct current to alternating current.

The power conversion device 1 constitutes a leg by a series circuit of a P-side arm ARMP configured by connecting a plurality of unit converters 2 in series and an N-side arm ARMN configured by connecting a plurality of unit converters 2 in series between a P terminal and an N terminal of the DC terminal 5, and connection points of the P-side arm ARMP and the N-side arm ARMN are separately connected to the three phases (U, V, W) of the AC terminal 4. Each arm is connected to each phase of the AC terminal 4 via a reactor 3.

According to the invention, a plurality of parallel leg structures is provided with respect to each phase of alternating current. Therefore, the P-side arm ARMP is configured such that L arms of ARMP1 to ARMPL are connected in parallel between the P terminal of the DC terminal 5 and each phase of the AC terminal 4 respectively, and the N-side arm ARMN is configured such that L arms of a first arm ARMN1 to an L-th arm ARMNL are connected in parallel between the N terminal of the DC terminal 5 and each phase of the AC terminal 4 respectively. Since these arm configurations are the same for each phase, a U-phase is taken as a representative phase unless otherwise required in the following description, and notations U, V, and W phases are omitted from the symbols to be given.

A gate pulse signal group for the unit converters 2 in the plurality of P-side arms ARMP (ARMP1 to ARMPL) for each phase is given from a P-side PWM control unit 100 (100UP, 100VP, 100WP), and a gate pulse signal group for the unit converters 2 in the plurality of N-side arms ARMN (ARMN1 to ARMNL) for each phase is given from a N-side PWM control unit 100 (100UN, 100VN, 100WN).

In the illustrated example, gate pulse signal groups for the unit converters 2 in the plurality of P-side arms ARMP (ARMP1 to ARMPL) between the U-phase and the P terminal are GPUP1k to GPUPLk, gate pulse signal groups for the unit converters 2 in the plurality of N-side arms ARMN (ARMN1 to ARMNL) between the U-phase and the N terminal are GPUN1k to GPUNLk, gate pulse signal groups for the unit converters 2 in the plurality of P-side arms ARMP (ARMP1 to ARMPL) between a V-phase and the P terminal are GPVP1k to GPPVPLk, gate pulse signal groups for the unit converters 2 in the plurality of N-side arms ARMN (ARMN1 to ARMNL) between the V-phase and the N terminal are GPVN1k to GPVNLk, gate pulse signal groups for the unit converters 2 in the plurality of P-side arms ARMP (ARMP1 to ARMPL) between a W-phase and the P terminal is GPWP1k to GPWPLk, and gate pulse signal groups for the unit converters 2 in the plurality of N-side arms ARMN (ARMN1 to ARMNL) between the W-phase and the N terminal are GPWN1k to GPWNLk.

Each PWM control unit 100 generates the gate pulse signal groups for driving each unit converter 2 of arms including the first arm to the L-th arm between each phase and the P terminal and the N terminal in accordance with modulation wave commands (VMUP, VMUN, VMVP, VMVN, VMWP, VMWN) of the P-side arms and the N-side arms for the three phases (U, V, W). Details inside of the PWM control unit 100 will be described later.

A gate pulse signal name described above or a symbol L of a signal name used below represents the number of parallel arms which are connected in parallel with each other between the P terminal or the N terminal and each of the three phases (U, V, W), and a symbol k (k = 1 to M) represents an identification number of a signal corresponding to each unit converter 2 in the arm, in which the symbol M represents the number of unit converters connected in series within the arm.

Next, a configuration example inside the arm will be described. FIG. 2 shows a configuration example of a first arm ARM1 which is a U-phase N-side arm. Since other arms also have the same configuration inside, the U-phase N-side arm is shown here as a representative example, and the description of the configuration inside other arms is omitted.

An arm includes a plurality of unit converters 2 which are connected in series between the AC terminal 4 and the DC N terminal via the reactor 3. Each of the plurality of unit converters 2 connected in series is given with a gate pulse signal group GPUN (GPUN1k in the case of the first arm ARM1 which is the U-phase N-side arm) from the PWM control unit 100. Here, a gate pulse signal for the unit converter 2 on an AC terminal 4 side is GPUN11, and a gate pulse signal for the unit converter 2 on a DC N terminal side is GPUN1M.

The unit converter 2 constitutes a so-called MMC. In the MMC, semiconductor switching elements 21H and 21L such as insulated gate bipolar transistors (IGBT) are connected in series, diodes 22H and 22L are disposed in parallel with the semiconductor switching elements 21H and 21L, and a capacitor 23 is provided in parallel in a series circuit of the semiconductor switching elements 21H and 21L. The unit converter 2 includes a gate driver 24 for on/off control of the semiconductor switching elements 21H and 21L. Here, a bidirectional chopper unit converter as shown in the drawing will be described as an example. However, for example, a full bridge unit converter can also be used.

Each gate driver 24 outputs a gate voltage under which the semiconductor switching elements 21H and 21L of each unit converter 2 are alternately turned on and off based on the gate pulse signal group GPUN1k (GPUN11 to GPUN1M) transmitted from the PWM control unit 100.

When the semiconductor switching element 21H is on and the semiconductor switching element 21L is off, output voltages VCUN11 to VCUN1M of each unit converter 2 are substantially equal to a voltage of the capacitor 23, and conversely, when the semiconductor switching element 21H is off and the semiconductor switching element 21L is on, the output voltages VCUN11 to VCUN1M of each unit converter 2 are substantially 0. A voltage with a rectangular wave (pulse) is output from each unit converter 2 in accordance with timing of the gate pulse signal group GPUN1k (GPUN11 to GPUN1M) transmitted from the PWM control unit 100.

Accordingly, an output voltage pulse VAUN1 obtained by synthesizing the output voltages VCUN11 to VCUN1M of each unit converter 2 is output from the arm ARM1 in which a plurality of unit converters are connected in series. A so-called multilevel waveform is generated.

Next, details of the PWM control unit 100 (power conversion method between arms connected in parallel) will be described. FIG. 3 is a diagram representatively showing a calculation block executed by a PWM control unit 100UN for the U-phase N-side arm.

For the description of the control by the PWM control unit 100, it is needless to say that calculation is executed by using a similar carrier wave generation method for the PWM control unit 100 for the N-side arm and the P-side arm with respect to other phases in accordance with each modulation wave command. Since control of a phase relationship between each phase and a relationship between the gate pulse signals to be given to the N-side arm and the P-side arm in the same leg are already known, hereinafter the description is omitted. It is assumed that these controls are already well known.

In the PWM control unit 100 of the invention represented by the PWM control unit 100UN for the U-phase N-side arm, two types of timing control are executed, one being timing control of the gate pulse signal group GPUN1k (GPUN11 to GPUN1M) (hereinafter referred to as first timing control) for the unit converters 2 connected in series in the same arm, and the other being timing control of gate pulse signal groups (GPUN1k to GPUNLK) (hereinafter referred to as second timing control) between a plurality of arms arranged in parallel. The former one is control in a vertical direction, and the latter one is control in a horizontal direction. The invention is characterized by the second timing control.

The PWM control unit 100 in FIG. 3 is configured by L gate pulse signal group generation units 20 (201 and 20L) for each of the parallel arms. In each gate pulse signal group generation unit 20, the same number of comparators 103 as the number k of unit converters 2 in each arm are provided, and a U-phase waveform (sine wave) of a three-phase AC in an AC system is input to one terminal of each comparator 103 as a U-phase N-side arm modulation wave command VMUN which is commonly input from outside. A carrier wave CRR is given to another terminal of each comparator 103, and a plurality of comparators 103 form the gate pulse signal group GPUN1k (GPUN11 to GPUN1M) for the unit converters 2 connected in series in the same arm.

In the following description of the PWM control unit 100 in FIG. 3, the first timing control is performed first, and then the second timing control which is the main point of the invention is performed. In the description of the first timing control, the gate pulse signal group generation unit 201 is used as a representative example, and other gate pulse signal group generation units 20 also perform similar process.

The signal to be input to one terminal of a plurality of comparators 103a in the gate pulse signal group generation unit 201 is a three-phase AC U-phase waveform (sine wave) in the AC system as the modulation wave command VMUN commonly input from the outside as described above, but the carrier wave which is an input to another terminal is generated by a carrier wave generation unit 102a based on output of a phase calculation unit 101.

Waveform generation in the first timing control starts with processing of the phase calculation unit 101 first. The phase calculation unit 101 is installed for each comparator 103a. In each of a plurality of phase calculation units 101, when the number of unit converters connected in series in the arm is M, and the identification number of each unit converter is k (k = 1, 2, ... M), an initial phase (θ11, θ12, ... θ1M) of a carrier wave group of the first arm is calculated by Formula (1). In the Formula (1), 360° corresponds to one cycle of the carrier wave.

$$\theta 1k = \frac{360^\circ \times (k-1)}{M} \quad \ldots (1)$$

Therefore, for example, when the number of unit converters connected in series in the arm is 30, signal groups are formed at intervals of 12°.

The carrier wave generation unit 102a generates a carrier wave group for the first arm (CRR11, CRR12, ... CRR1M) based on the signal group of the initial phase at intervals of 12° calculated by the phase calculation unit 101 and a predetermined carrier cycle. A carrier shown in the carrier wave generation unit 102a is a triangular wave corresponding to 360° of an AC waveform between bottoms or between tops.

The plurality of comparators 103a compare the U-phase N-side arm modulation wave command VMUN with the carrier wave group for the first arm (CRR11, CRR12, ... CRR1M) in magnitude, and form and output the gate pulse signal group GPUN1k for a U-phase N-side first arm. The above is a waveform generation processing in the first timing control.

As a result, the plurality of unit converters 2 connected in series to form one arm generates voltages which change in a stepwise manner similar to the sine wave of the modulation wave command VMUN, with the number of turning on or off in one cycle of the AC waveform being sequentially changed.

Next, a method of generating a carrier wave of the L-th arm connected in parallel with the first arm (a waveform generation processing in the second timing control) will be described.

A phase (θ[L - 1]1, θ[L - 1]2, ... θ[L - 1]M) which is shown in the gate pulse signal group generation unit 20L of FIG. 3 is an initial phase of the carrier wave group of one previous arm ((L - 1) -th arm) with respect to the L-th arm. For example, when the parallel number L = 2, the initial phase of the carrier wave group of one previous arm is the initial phase (θ11, θ12, ... θ1M) of the carrier wave group of the first arm.

The initial phase (θL1, θL2, ... θLM) of the carrier wave group of the L-th arm is a value obtained by adding a phase ϕ to the initial phase (θ[L - 1]1, θ[L - 1]2, ... θ[L - 1]M) of the carrier wave group of the one previous arm. That is, a phase of the carrier wave group of the L-th arm is advanced by the phase ϕ with respect to the phase of the carrier wave group of the one previous arm.

The phase ϕ is obtained using Formula (2). In the Formula (2), 360° corresponds to one cycle of the carrier wave, the symbol M represents the number of unit converters connected in series in the arm, and the symbol L represents the number of parallel arms.

$$\phi = \frac{360^\circ}{M \times L} \quad \ldots (2)$$

The initial phase of the carrier wave group of the L-th arm may be delayed by subtracting the phase ϕ from the initial phase of the carrier wave group of the one previous arm.

FIG. 4 shows phase relationship of the carrier wave group for each arm in an organized manner, and for example, an initial phase (θ11, θ12, ... θ1M) of the carrier wave group in the gate pulse signal group generation unit 201 of the first arm is shown as pulse groups at intervals of 12° in 360° with reference to, for example, 0°. For these pulse groups, an initial phase (θ21, θ22, ... θ2M) of a carrier wave group in a gate pulse signal group generation unit 202 of a second arm is shown at positions separated by the phase ϕ from θ11, θ12, ... θ1M respectively. Similarly, an initial phase of a carrier wave group of an arm is shown at positions separated by the phase ϕ with respect to that of a previous arm.

A carrier wave generation unit 102b in the gate pulse signal group generation unit 20L generates a carrier wave (CRRL1, CRRL2, ... CRRLM) for the unit converters of the L-th arm based on the initial phase (θL1, θL2, ... θLM) and the predetermined carrier cycle.

A comparator 103b compares the U-phase N-side arm modulation wave command VMUN with the carrier wave group for the L-th arm (CRRL1, CRRL2, ... CRRLM) in magnitude, and outputs the gate pulse signal group GPUNLk for a U-phase N-side L-th arm.

As a result, the plurality of unit converters 2 connected in series to form one arm ARMNL generates voltages which change in the stepwise manner similar to the sine wave of the modulation wave command VMUN, with the number of turning on or off in one cycle of the AC waveform being sequentially changed.

However, as a result of setting a time difference corresponding to the carrier phase $\phi$ for each arm, the voltage generated in another arm and the voltage generated in the arm form L sets of stepped voltages whose phases are sequentially shifted.

As described above, in the power conversion method (waveform generation processing in the second timing control) of the invention, the phase difference $\phi$ is set between carrier wave groups of the first arm to the L-th arm which are connected in parallel. The arms connected in parallel are preferably driven by a same control board having a common clock signal in order to maintain the carrier phase difference with high accuracy.

FIG. 5 shows waveforms of each part when the number of parallel arms L = 2 and the number M of unit converters is 3 (odd number). FIG. 6 shows waveforms of each part when the number of parallel arms L = 2 and the number M of unit converters is 4 (even number).

In FIGS. 5 and 6, the horizontal axis shows 0° to 720° corresponding to two periods of an AC sine waveform, and vertical axes show a U-phase AC voltage Vu from the top, the first arm output voltage pulse VAUN1, a first arm PWM signal, a second arm output voltage pulse VAUN2, a second arm PWM signal, and a DC voltage.

In FIGS. 5 and 6, a first-stage waveform of the AC output voltage Vu of the power conversion device on the vertical axis shows that, by shifting the output voltage pulse VAUN1 (second-stage waveform) of the U-phase N-side first arm and the output voltage pulse VAUN2 (fourth-stage waveform) of the U-phase N-side second arm by the phase $\phi$, the harmonic of AC output can be reduced with the number of stages of the multilevel waveform being increased.

In FIG. 5, a third-stage waveform and a fifth-stage waveform are examples of the U-phase N-side modulation wave command VMUN, the carrier wave group of the first arm (CRR11, CRR12, CRR13), and a carrier wave group of the second arm (CRR21, CRR22, CRR23). The carrier cycle was 1/2 of the modulation wave. In FIG. 5, the number of unit converters M = 3 and the number of parallel arms L = 2, initial phases of the carrier wave group of the first arm (CRR11, CRR12, CRR13) are $\theta 11$ = 0°, $\theta 12$ = 120°, and $\theta 13$ = 240°, and initial phases of the carrier wave group of the second arm (CRR21, CRR22, CRR23) are $\theta 21$ = 60°, $\theta 22$ = 180°, and $\theta 23$ = 300°. That is, in this case, the phase difference $\phi$ between the carrier wave group of the first arm and the carrier wave group of the second arm is set to $\phi$ = 60° (= 360° / (M $\times$ L)).

In FIG. 6, the third-stage waveform and the fifth-stage waveform are examples of the U-phase N-side modulation wave command VMUN, the carrier wave group of the first arm (CRR11, CRR12, CRR13, CRR14), and the carrier wave group of the second arm (CRR21, CRR22, CRR23, CRR24). The carrier cycle was 1/2 of the modulation wave similar to that in FIG. 5. When the number of unit converters M = 4 and the number of parallel arms L = 2, initial phases of the carrier wave group of the first arm (CRR11, CRR12, CRR13, CRR14) are $\theta 11$ = 0°, $\theta 12$ = 90°, $\theta 13$ = 180°, and $\theta 14$ = 270°, and initial phases of the carrier wave group of the second arm (CRR21, CRR22, CRR23, and CRR24) are $\theta 21$ = 45°, $\theta 22$ = 135°, $\theta 23$ = 225°, and $\theta 24$ = 315°. That is, in this case, the phase difference $\phi$ between the carrier wave group of the first arm and the carrier wave group of the second arm is set to $\phi$ = 45° (= 360° / (M $\times$ L)).

In FIGS. 5 and 6, a sixth-stage waveform is voltage Vdc between the DC P terminal and the DC N terminal. In the power conversion method of the present embodiment, while shifting the output voltage pulses of the first arm and the second arm, no potential difference is generated between the P-side arm and the N-side arm with respect to the three phases, so that the voltage Vdc between the DC P terminal and the DC N terminal is constant.

As described above, according to the power conversion device and the power conversion method of the invention, the harmonic of AC output can be reduced without causing pulsation of the voltage between the DC P terminal and the DC N terminal by shifting the output voltage pulse between the arms connected in parallel.

## Claims

**1.** A power conversion device (1) that converts an alternating current to a direct current or a direct current to an alternating current, the power conversion device (1) comprising:

a plurality of arm groups (ARMP, ARMN) connected in parallel, each arm group including P-side arms (ARMP1 to ARMPL) formed between a DC P terminal and an AC terminal (2), and N-side arms (ARMN1 to ARMNL) formed between a DC N terminal and the AC terminal (2), wherein
each of the P-side arms (ARMP1 to ARMPL) and N-side arms (ARMN1 to ARMNL) includes a plurality of unit converters (2) connected in series, each unit converter (2) including a capacitor (23) and a semiconductor switching element (21L, 21H) connected in parallel,
the plurality of semiconductor switching elements (21L, 21H) in the plurality of unit converters (2) which constitute the arm are turned on and off by a gate pulse signal group determined by a modulation wave and a carrier wave group, and
when the plurality of arm groups (ARMP, ARMN) connected in parallel are from a first arm (ARM1) to an L-th arm, a phase difference $\phi$ is set between the carrier wave group of the first arm (ARM1) and the carrier wave group of the L-th arm, and an output voltage pulse of the L-th arm is shifted from the first arm (ARM1).

**2.** The power conversion device (1) according to claim 1, wherein
the number of the unit converters (2) in the arm is M, the number of parallel arms is L, and a phase difference $\phi$ between the carrier wave group of the first arm (ARM1) and the carrier wave group of the L-th arm is set to 360°/(M $\times$ L); and the output voltage pulse of the L-th arm is shifted from the first arm (ARM1).

**3.** The power conversion device (1) according to claim 1 or 2, wherein
the first arm (ARM1) to the L-th arm are driven by a same control board having a common clock signal.

**4.** The power conversion device (1) according to any one of claims 1 to 3, wherein
the P-side arms are formed between the DC P terminal and each terminal of a three-phase AC, and the N-side arms are formed between the DC N terminal and each terminal of the three-phase AC, so as to convert an alternating current to a direct current or a direct current to an alternating current.

**5.** A power conversion method for a power conversion device (1) that converts an alternating current to a direct current or a direct current to an alternating current, wherein
the power conversion device (1) including a plurality of arm groups (ARMP, ARMN) connected in parallel, each arm group including P-side arms formed between a DC P terminal and an AC terminal (2), and N-side arms formed between a DC N terminal and the AC terminal (2),
each of the P-side arms and N-side arms includes a plurality of unit converters (2) connected in series, each unit converter including a capacitor (23) and a semiconductor switching element (21L, 21H) connected in parallel,
the plurality of semiconductor switching elements (21L, 21H) in the plurality of unit converters (2) which constitute the arm are turned on and off by a gate pulse signal group determined by a modulation wave and a carrier wave group, and
when the plurality of arm groups (ARMP, ARMN) connected in parallel are from a first arm (ARM1) to an L-th arm, a phase difference $\phi$ is set between the carrier wave group of the first arm (ARM1) and the carrier wave group of the L-th arm, and an output voltage pulse of the L-th arm is shifted from the first arm (ARM1).

**6.** The power conversion method for the power conversion device (1) according to claim 5, wherein
the number of the unit converters (2) in the arm is M, the number of parallel arms is L, and a phase difference $\phi$ between the carrier wave group of the first arm (ARM1) and the carrier wave group of the L-th arm is set to 360°/(M $\times$ L); and the output voltage pulse of the L-th arm is shifted from the first arm (ARM1).

**7.** The power conversion method for the power conversion device (1) according to claim 5 or 6, wherein
the first arm (ARM1) to the L-th arm are driven by a same control board having a common clock signal.

**8.** The power conversion method for the power conversion device (1) according to any one of claims 5 to 7, wherein
the P-side arms are formed between the DC P terminal and each terminal of a three-phase AC, and the N-side arms are formed between the DC N terminal and each terminal of the three-phase AC, so as to convert an alternating current to a direct current or a direct current to an alternating current.

FIG. 1

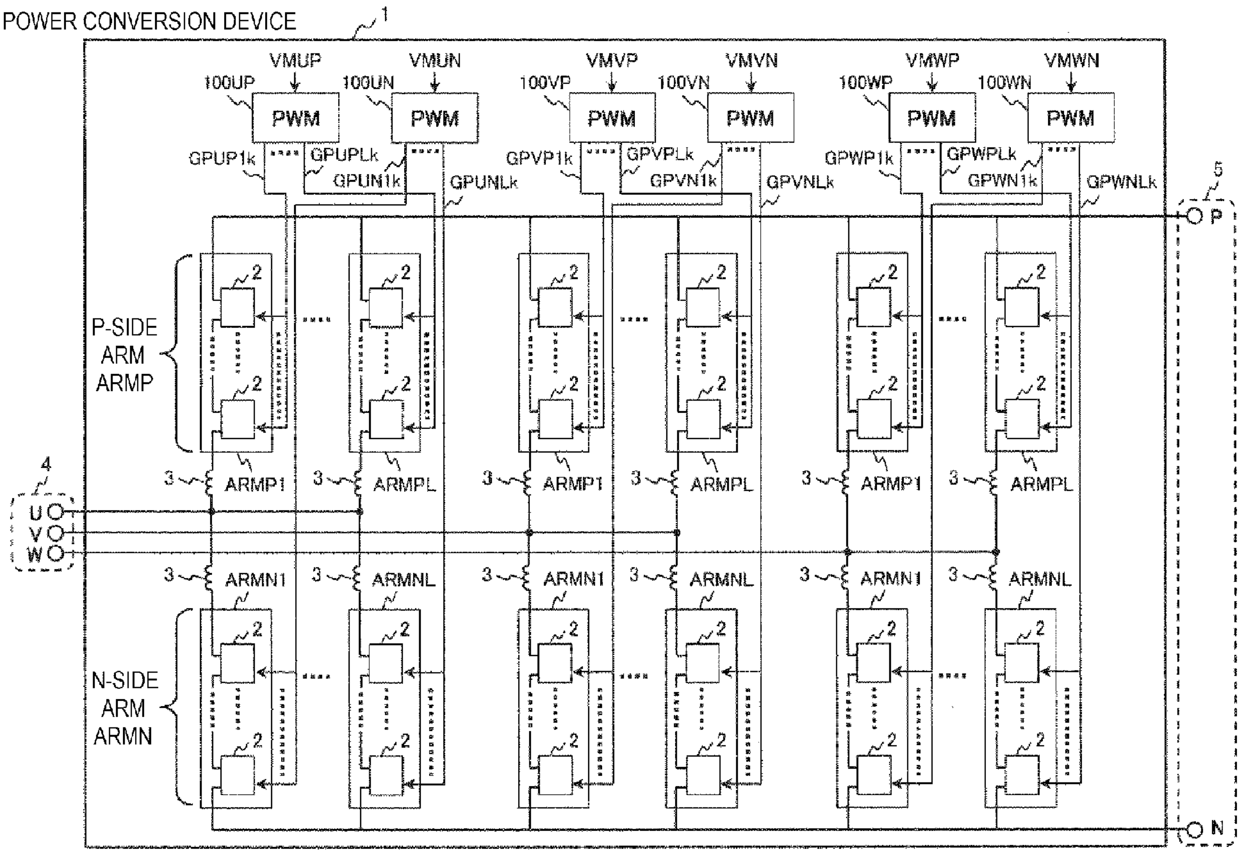

POWER CONVERSION DEVICE
1
VMUP
VMUN
VMVP
VMVN
VMWP
VMWN
100UP
100UN
100VP
100VN
100WP
100WN
PWM
GPUP1k
GPUPLk
GPUN1k
GPUNLk
GPVP1k
GPVPLk
GPVN1k
GPVNLk
GPWP1k
GPWPLk
GPWN1k
GPWNLk
5
P
2
P-SIDE
ARM
ARMP
3
ARMP1
ARMPL
4
U
V
W
ARMN1
ARMNL
N-SIDE
ARM
ARMN
N

FIG. 2

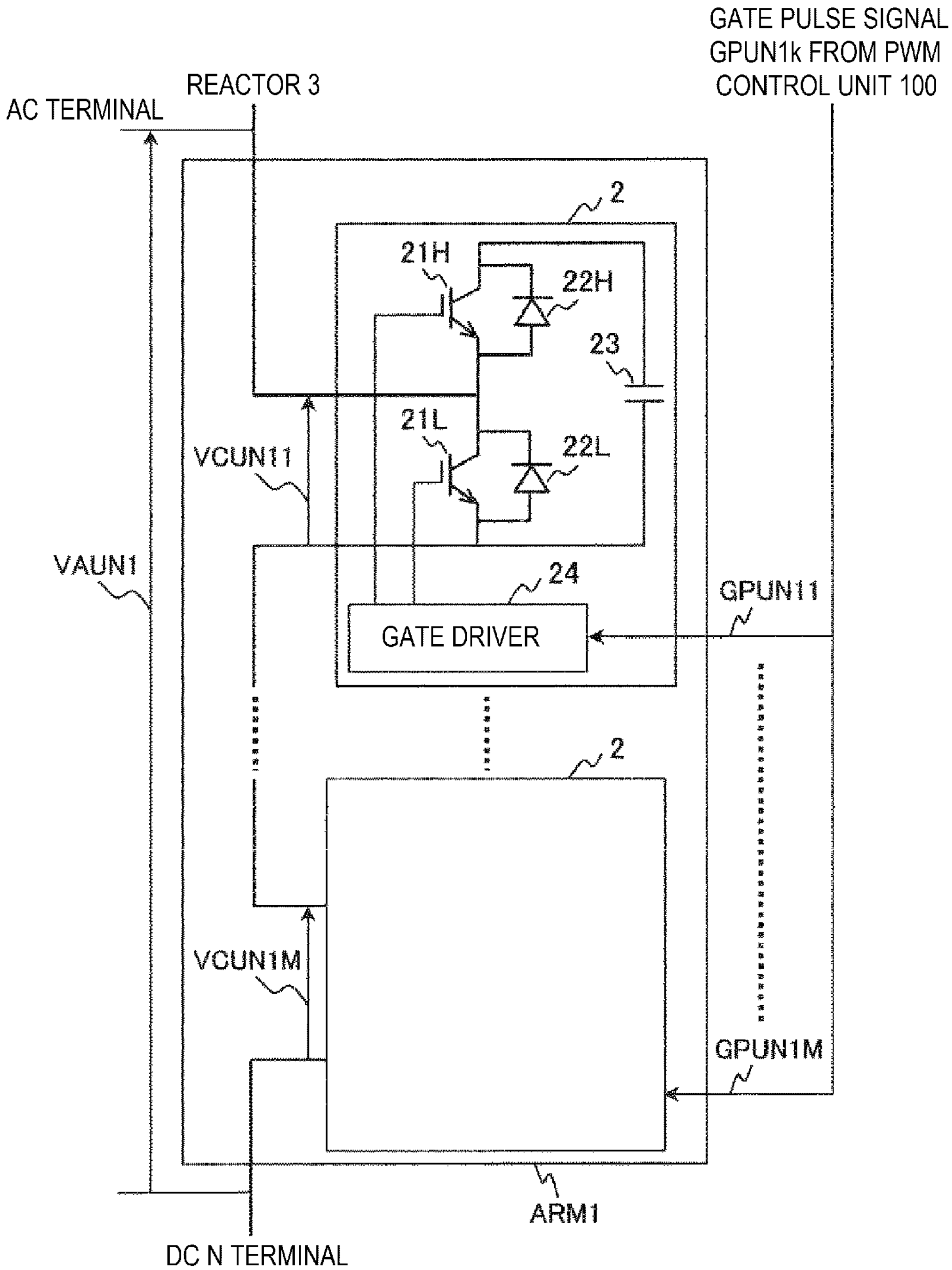
GATE PULSE SIGNAL
GPUN1k FROM PWM
CONTROL UNIT 100
REACTOR 3
AC TERMINAL
2
21H
22H
23
21L
22L
VCUN11
VAUN1
24
GATE DRIVER
GPUN11
2
VCUN1M
GPUN1M
ARM1
DC N TERMINAL

FIG. 3

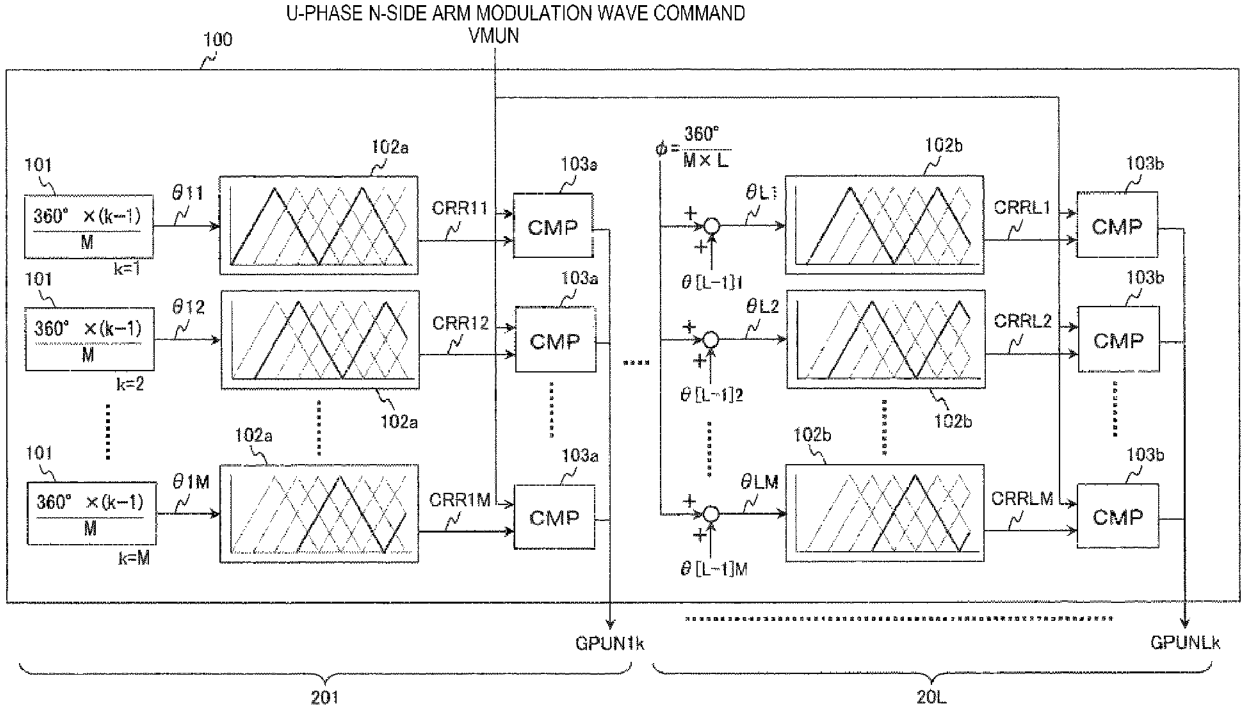
U-PHASE N-SIDE ARM MODULATION WAVE COMMAND
VMUN
100
101
360° × (k−1) / M
k=1
k=2
k=M
θ11
θ12
θ1M
102a
CRR11
CRR12
CRR1M
103a
CMP
ϕ = 360° / M × L
θL1
θL2
θLM
θ[L−1]1
θ[L−1]2
θ[L−1]M
102b
CRRL1
CRRL2
CRRLM
103b
GPUN1k
GPUNLk
201
20L

FIG. 4

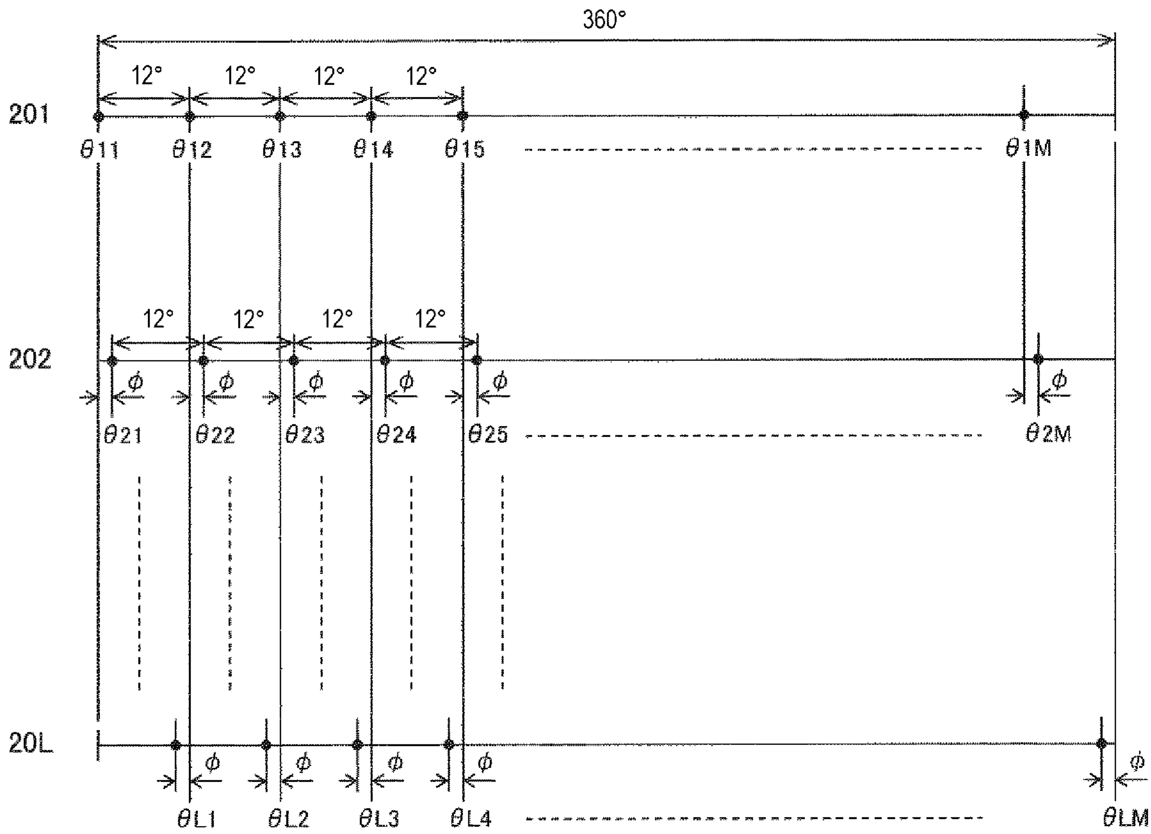
360°
12°
12°
12°
12°
201
θ11
θ12
θ13
θ14
θ15
θ1M
202
12°
12°
12°
12°
ϕ
θ21
θ22
θ23
θ24
θ25
θ2M
20L
θL1
θL2
θL3
θL4
θLM

*FIG. 5*

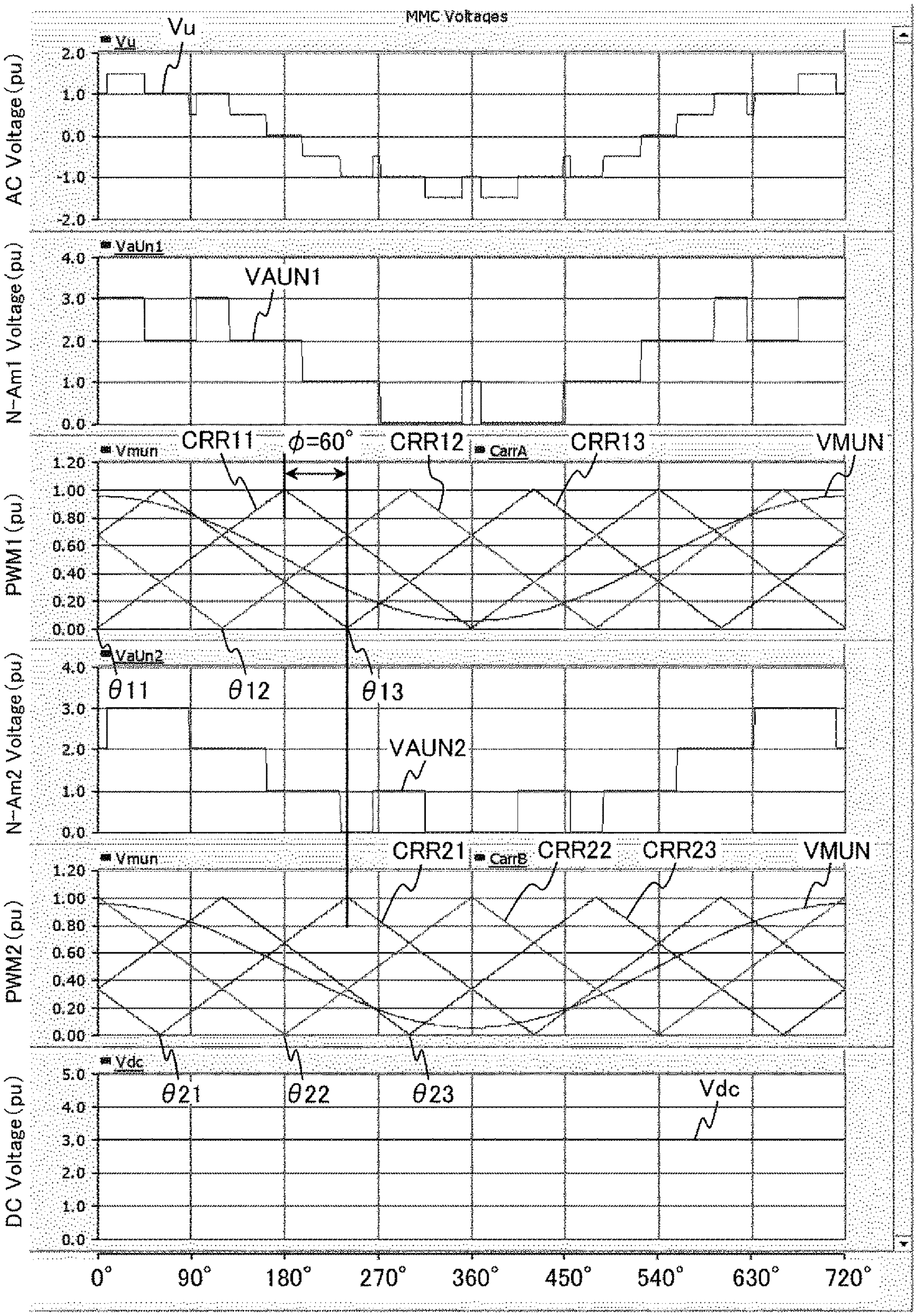
MMC Voltages
Vu
Vu
AC Voltage (pu)
2.0
1.0
0.0
-1.0
-2.0
VaUn1
VAUN1
N-Am1 Voltage (pu)
4.0
3.0
2.0
1.0
0.0
Vmun
CRR11
ϕ=60°
CRR12
CarrA
CRR13
VMUN
PWM1 (pu)
1.20
1.00
0.80
0.60
0.40
0.20
0.00
θ11
θ12
θ13
VaUn2
N-Am2 Voltage (pu)
4.0
3.0
2.0
1.0
0.0
VAUN2
Vmun
CRR21
CarrB
CRR22
CRR23
VMUN
PWM2 (pu)
1.20
1.00
0.80
0.60
0.40
0.20
0.00
θ21
θ22
θ23
Vdc
Vdc
DC Voltage (pu)
5.0
4.0
3.0
2.0
1.0
0.0
0°
90°
180°
270°
360°
450°
540°
630°
720°

*FIG. 6*

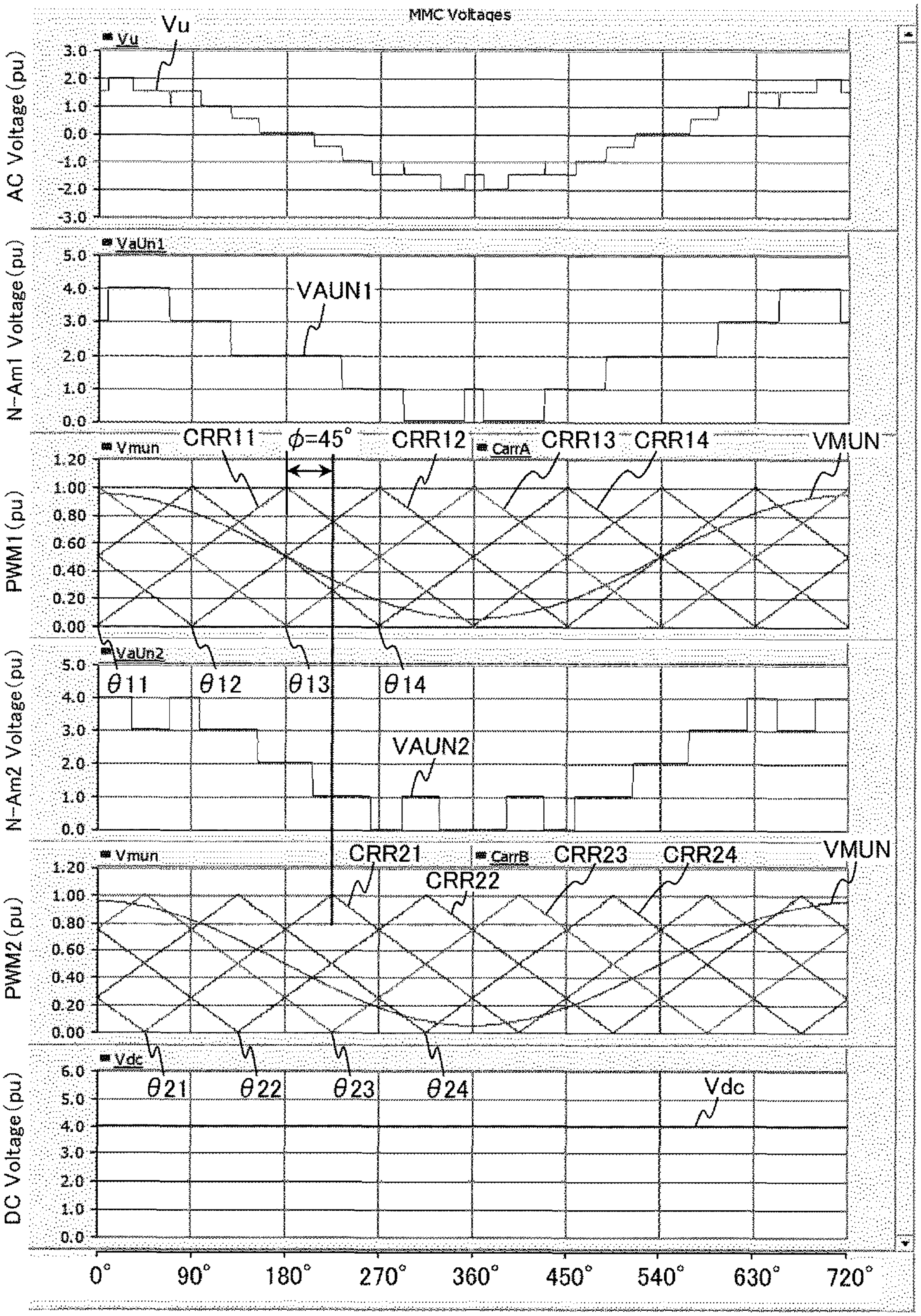
MMC Voltages
Vu
AC Voltage (pu)
3.0
2.0
1.0
0.0
-1.0
-2.0
-3.0
VaUn1
N-Am1 Voltage (pu)
5.0
4.0
3.0
2.0
1.0
0.0
VAUN1
Vmun
CRR11
ϕ=45°
CRR12
CarrA
CRR13
CRR14
VMUN
PWM1 (pu)
1.20
1.00
0.80
0.60
0.40
0.20
0.00
VaUn2
θ11
θ12
θ13
θ14
N-Am2 Voltage (pu)
VAUN2
Vmun
CRR21
CarrB
CRR22
CRR23
CRR24
VMUN
PWM2 (pu)
θ21
θ22
θ23
θ24
Vdc
DC Voltage (pu)
6.0
5.0
4.0
3.0
2.0
1.0
0.0
0°
90°
180°
270°
360°
450°
540°
630°
720°

Europäisches Patentamt
European Patent Office
Office européen des brevets

# EUROPEAN SEARCH REPORT

Application Number
EP 19 20 8845

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | GAO FENG ET AL: "Control of Parallel-Connected Modular Multilevel Converters", IEEE TRANSACTIONS ON POWER ELECTRONICS, INSTITUTE OF ELECTRICAL AND ELECTRONICS ENGINEERS, USA, vol. 30, no. 1, 1 January 2015 (2015-01-01), pages 372-386, XP011557511, ISSN: 0885-8993, DOI: 10.1109/TPEL.2014.2313333 [retrieved on 2014-08-26] * abstract * * page 380, left-hand column, paragraph 1; figures 1, 2 * ----- | 1-8 | INV. H02M1/15 H02M1/12 H02M7/483 H02M7/493 |
| Y | EP 0 945 971 A2 (ELECTRIC BOAT CORP [US]) 29 September 1999 (1999-09-29) * abstract * * paragraphs [0004] - [0007], [0046] - [0049]; figures 1, 2, 4, 10, 17 * ----- | 1-8 | |

TECHNICAL FIELDS SEARCHED (IPC)

H02M

The present search report has been drawn up for all claims

1

| Place of search | Date of completion of the search | Examiner |
|---|---|---|
| The Hague | 16 March 2020 | Van der Meer, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 19 20 8845

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2020

| Patent document cited in search report | Publication date | Patent family member(s) | Publication date |
|---|---|---|---|
| EP 0945971 A2 | 29-09-1999 | DE 69908469 T2 | 15-01-2004 |
| | | EP 0945971 A2 | 29-09-1999 |
| | | JP H11318086 A | 16-11-1999 |
| | | US 5933339 A | 03-08-1999 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6017272 B